(19) Europäisches Patentamt
European Patent Office
Office européen des brevets

(11) **EP 4 178 916 B1**

(12) **EUROPEAN PATENT SPECIFICATION**

(45) Date of publication and mention
of the grant of the patent:
**01.05.2024  Bulletin 2024/18**

(21) Application number: **21740237.9**

(22) Date of filing: **13.07.2021**

(51) International Patent Classification (IPC):
***C01G 53/00*** (2006.01)  ***H01M 4/505*** (2010.01)
***H01M 4/525*** (2010.01)

(52) Cooperative Patent Classification (CPC):
**C01G 53/50; H01M 4/505;** C01P 2002/20;
C01P 2002/52; C01P 2002/54; C01P 2002/72;
C01P 2002/76; C01P 2002/85; C01P 2004/03;
C01P 2004/32; C01P 2006/40; H01M 10/0525;
Y02E 60/10

(86) International application number:
**PCT/IB2021/056279**

(87) International publication number:
**WO 2022/013725 (20.01.2022 Gazette 2022/03)**

(54) **LI-RICH TRANSITION METAL OXIDES MATERIAL**

LI-REICHES ÜBERGANGSMETALLOXIDMATERIAL

MATÉRIAU À BASE D'OXYDES DE MÉTAUX DE TRANSITION RICHES EN LI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2020   IT 202000016966**

(43) Date of publication of application:
**17.05.2023   Bulletin 2023/20**

(73) Proprietors:
• **Fondazione Istituto Italiano di Tecnologia
16163 Genova (IT)**
• **Universita'Degli Studi di Roma "La Sapienza"
00185 Roma (IT)**
• **UNIVERSITA' DEGLI STUDI DI GENOVA
16126 Genova (IT)**

(72) Inventors:
• **PELLEGRINI, Vittorio
16163 Genova (IT)**
• **BRUTTI, Sergio
00136 Roma (IT)**
• **SILVESTRI, Laura
16163 Genova (IT)**
• **CELESTE, Arcangelo
16163 Genova (IT)**

(74) Representative: **Studio Torta S.p.A.
Via Barberini, 67
00187 Roma (IT)**

(56) References cited:
**US-A1- 2015 270 545     US-A1- 2019 334 171**

EP 4 178 916 B1

**Description**

CROSS-REFERENCE TO RELATED APPLICATIONS

This patent application claims priority from Italian patent application no. 102020000016966 filed on 13/07/2020.

TECHNICAL FIELD

The present invention relates to a Li-rich transition metal oxides material. In particular, the material of the invention finds its preferred usefulness as cathode for lithium-ion batteries.

BACKGROUND ART

Lithium ion batteries (LIBs) are lightweight and compact devices, exhibiting operating voltages in the order of 4 V and specific energies ranging between 100 Wh/kg and 150 Wh/kg. During charge/discharge, Li ions flow between the anode and the cathode, enabling the conversion of chemical energy into electrical energy and the storage of electrochemical energy within the battery. Current commercial LIBs are made up of a cathode formed by a lithium metal oxide, an anode typically formed by graphite and a liquid electrolyte. Among battery components, the material of the positive electrode is often responsible for limiting the performance of the whole battery.

Fundamental characteristics for a cathode material are reversibility of electrochemical process, high cycle efficiency, no phase transition and electrochemical and thermal stability. The most important cathode materials are lithium metal-layered oxide ($LiMO_2$). In particular, $LiCoO_2$ (LCO) has been the most widely used cathode material in commercialized LIBs because of its easy preparation and stable electrochemical performances. Nonetheless, this material has several drawbacks: practical specific capacity limited to 130 mAh/g, low thermal stability, fast capacity fade and high cost of cobalt.

Significant research efforts have been made on the investigation of new ayered materials, such as isostructural $LiNiO_2$ (LNO) and $LiMnO_2$ (LMO) in order to overcome the limits of $LiCoO_2$. LNO is particularly interesting because it is cheap and shows high reversible capacity. However, it is difficult to synthesize an ordered phase due to the cation mixing of $Li^+$ and $Ni^{3+}$ in lithium planes and it can release oxygen exothermically in the charged state at elevated temperatures raising safety issues. Layered $LiMnO_2$ (LMO) has also been studied due to its low cost and environmental compatibility, but, as for LNO, its use in lithium cell is limited because it is not electrochemically stable due to an irreversible phase transition into a spinel structure during charge/discharge.

Two and three-component systems, combining the features of Nickel, Cobalt and Manganese, have also been explored.

$LiNi_xCo_{1-x}O_2$ in which the substitution of $Co^{3+}$ ions with $Ni^{3+}$ ions decrease cation mixing was extensively prepared but, when tested in lithium cell, showed capacity fading upon cycling. The electrochemical stability was improved by the introduction of $Al^{3+}$ ions in the structure obtaining the so-called NCA materials, with chemical formula $Li[Ni_xCo_yAl_{1-x-y}]O_2$. Nevertheless, it was found that after prolonged cycling in lithium cell, also NCA materials display a capacity fading due to surface reactions and degradation.

The combination of Ni, Co and Mn can lead to a group of compounds with different stoichiometry, the so-called NMC compounds. Among the various members of this family, $Li[Ni_{1/3}Mn_{1/3}Co_{1/3}]O_2$ has been studied extensively for its promising electrochemical performances, thanks to higher specific capacity. However, also in this case there are several issues, such as capacity fading and poor electrochemical performances at high voltage. Furthermore, their specific capacity and electrochemical stability are still not enough to satisfy the growing energy demand.

Recently, lithium-rich transition metal oxide (LR-NMC) have attracted much attention due to their large operating voltage and high specific capacity exceeding 200 mAh/g of commercial $LiCoO_2$. Lithium-rich materials have layered structure and two different notations can be used to describe this kind of structure: a nanocomposite, $xLi_2MnO_3\cdot(1-x)LiNi_aCo_bMn_cO_2$, or single phase solid solution of both components, $Li_{(1+x)}M_{(1-x)}O_2$ (where M = Ni, Mn and Co). LR-NMCs work in the range 2-4.8 V and the high capacity observed during the first delithiation is attributed partly to the oxidation of Co and Ni, but the majority of the charge involved in this step is associated with the activation of the $Li_2MnO_3$ component. Nevertheless, the use of lithium-rich transition metal oxide in a Li-ion device is still limited by several issues, poor rate capability, mean working potential decay upon cycling and large cobalt content.

US2019/334171 A discloses a process for producing a layered lithium-manganese-nickel-cobalt oxide material.

Several efforts to reduce these problems have been made, including the development of different synthetic strategies, doping with other metals (e.g. Al, Yb, Zr, Ni, Mg and Ti) and surface modification without satisfactory results. In particular, the increase of lithium content beyond 1.2 stoichiometry has been already attempted unsuccessfully and the replacement of redox active transition metal centres (Mn, Co, Ni) with redox inactive metals (such as Al) fails to stabilize the reversibility of the de-intercalation/intercalation. Furthermore, in order to make these materials compatible with large-scale production it is also important the reduction of costs and toxicity of cobalt.

In light of the above, the need was felt to have a Li-rich cathode material which did not have the drawbacks of the prior art.

The inventors of the present invention have devised a new Li-rich transition metal oxides material having a reduced amount of cobalt respect to other existing Li-rich materials and that, in the same time, guarantees high performances in terms of specific capacity, cycling stability and rate capability.

DISCLOSURE OF INVENTION

The subject of the present invention is a Li-rich transition metal oxides material having general formula $Li_{1.2+x}Mn_{0.54}Ni_{0.13}Co_{0.13-x-y}Al_yO_2$ where $0.01 \leq x \leq 0.1$; $0.01 \leq y \leq 0.1$; and $0.03 \leq x+y < 0.13$.

Preferably $0.03 \leq x \leq 0.08$.

Preferably $0.03 \leq y \leq 0.05$.

Preferably, the compounds of the invention are selected in the group consisting of $Li_{1.23}Mn_{0.54}Ni_{0.13}Co_{0.07}Al_{0.03}O_2$, $Li_{1.26}Mn_{0.54}Ni_{0.13}Co_{0.04}Al_{0.03}O_2$, $Li_{1.28}Mn_{0.54}Ni_{0.13}Co_{0.02}Al_{0.03}O_2$ and $Li_{1.26}Mn_{0.54}Ni_{0.13}Co_{0.02}Al_{0.05}O_2$.

Another subject of the present invention is a cathode for Li-ion batteries, characterized by being made of the Li-rich transition metal oxides material of the invention.

Another subject of the invention is a sol-gel process for preparing the Li-rich transition metal oxides material of the invention; said sol-gel process being characterized by comprising the following steps:

a) mixing the metal precursors with a Li excess in a solvent;
b) adding a gelling agent to obtain a gel as product keeping a pH > 7;
c) drying the solution at a temperature lower than 100°C until a viscous mass is obtained;
d) thermally treating the obtained product at a temperature comprised between 300 and 500 °C for at least an hour;
e) annealing the milled product of step d at a temperature comprised between 800-1000°C.

Preferably, the solvent used in step a is water.

Preferably, in step a the metal precursors are comprised in the group consisting of acetates, nitrates, sulfates, carbonates and oxides.

Preferably in step b the additives to promote the gel formation are oxalic or ascorbic or citric acid.

BRIEF DESCRIPTION OF THE DRAWINGS

Hereinafter there is a description of some embodiments of the invention, by mere way of explanatory and non-limiting examples, with reference to the accompanying drawings, wherein:

- figure 1 shows XRD Patterns of $Li_{1.2+x}Mn_{0.54}Ni_{0.13}Co_{0.13-x-y}Al_yO_2$ as function of content of cobalt. Hexagonal $LiMO_2$ and monoclinic $Li_2MnO_3$ have been reported as reference.
- figure 2 shows four HR-SEM images of $Li_{1.23}Mn_{0.54}Ni_{0.13}Co_{0.07}Al_{0.03}O_2$ at different magnifications. a) x 10.000; b) x 25.000; c) x 50.000; d) x 100.000.
- figure 3 shows four EDX maps of Mn, Ni, Co and Al of $Li_{1.23}Mn_{0.54}Ni_{0.13}Co_{0.07}Al_{0.03}O_2$.
- figure 4 shows a first charge/discharge voltage profile at C-rate=C/10 of $Li_{1.2+x}Mn_{0.54}Ni_{0.13}Co_{0.13-x-y}Al_yO_2$ where x=0 and y varies.
- figure 5 shows specific capacity vs cycle number plot obtained in lithium cell (rate C/10) of materials of figure 4.
- figure 6 shows a) voltage profile and b) specific capacity vs cycle number plot obtained in lithium cell (rate C/10) for three $Li_{1.2+x}Mn_{0.54}Ni_{0.13}Co_{0.13-x-y}Al_yO_2$ materials.
- figure 7 shows a) voltage profile and b) specific capacity vs cycle number plot obtained in lithium cell (rate C/10) for $Li_{1.26}Mn_{0.54}Ni_{0.13}CO_{0.02}Al_{0.05}O_2$.
- figure 8 shows rate capability tests of three $Li_{1.2+x}Mn_{0.54}Ni_{0.13}Co_{0.13-x-y}Al_yO_2$ materials.
- figure 9 shows specific capacity vs cycle number obtained in lithium cell under galvanostatic cycling (rate 1C) of four $Li_{1.2+x}Mn_{0.54}Ni_{0.13}Co_{0.13-x-y}Al_yO_2$ materials.

BEST MODE FOR CARRYING OUT THE INVENTION

Materials according to the general formula $Li_{1.2+x}Mn_{0.54}Ni_{0.13}Co_{0.13-x-y}Al_yO_2$ were prepared by the synthesis process below:

Stoichiometric amounts of $LiCH_3COO \cdot 2H_2O$ (lithium acetate dihydrate, Sigma-Aldrich), $Mn(CH_3COO)_2 \cdot 4H_2O$ (manga-

nese (II) acetate tetrahydrate, Sigma-Aldrich), $Ni(CH_3COO)_2\cdot4H_2O$ (Nickel (II) acetate tetrahydrate, Sigma-Aldrich), $Co(CH_3COO)_2\cdot4H_2O$ (Cobalt (II) acetate tetrahydrate, Sigma-Aldrich) and $(HO)_2Al(CH_3COO)$ (Aluminum acetate dibasic, Sigma-Aldrich) were dissolved in ultrapure water. 5 wt.% excess of lithium acetate was included in the synthesis in order to compensate the lithium loss during the high heating process.

An aqueous solution of $C_2H_2O_4$ (oxalic acid, Sigma-Aldrich) around 0.38 M, acting as chelating agent, was added to the metal-acetate solution, in order to have chelating agent/metals molar ratio of 1.5/1 and left under stirring.

The pH in the mixture was kept at 8 by the addition of ammonia solution ($NH_4OH$ 32%, Sigma-Aldrich) dropwise.

Then, the solution was dried slowly by heating at 80 °C and continuously stirred until a viscous mass was obtained. The obtained gel was finally completely dried at 200°C under vacuum for 18 hours.

To obtain the final product, two thermal treatments have been carried out in a muffle furnace in air. The resulted powder, finely milled, was pre-heated in the furnace at 450°C for 2 hours (temperature ramp: 10°C/min). The product was recovered from furnace, milled by mortar and pestle and re-heated 12 hours at 900°C with a temperature ramp of 10°C/min and setting a cooling rate of 0.25°C/min.

Finally, the stoichiometry of the synthesized compounds has been verified by elemental analysis using ICP-OES (Inductively coupled plasma - optical emission spectrometry).

The above described materials can be prepared by other techniques different from sol-gel, e.g. co-precipitation, solid-state molten salts and hydrothermal synthesis.

Qualitative analysis - XRD

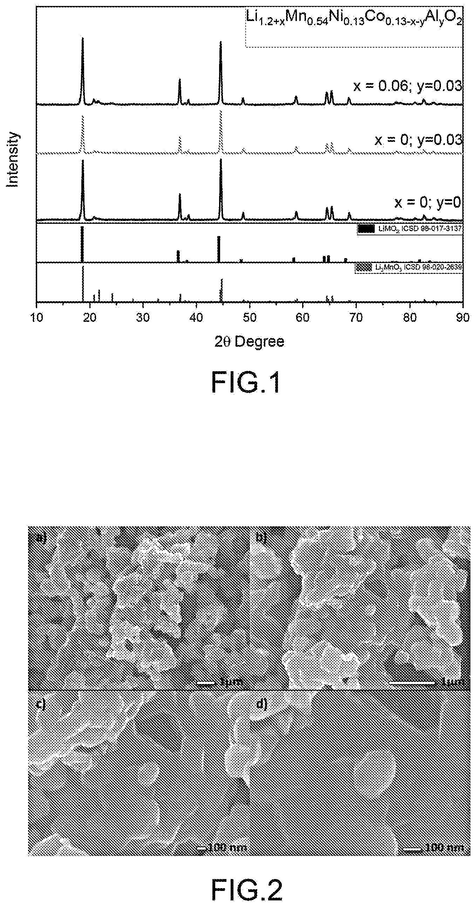

Figure 1 shows the XRD patterns to compare the crystal structure of the material before and after the Al- and Li-co-doping. XRD patterns were collected using a Malvern PANalytical Empyrean with Cu K$\alpha$ radiation source in the range of 2$\Theta$ degree of 10°-90° with a step of 0.026°. We can observe all the three compounds resulted crystalline and the diffraction lines appear sharp and intense. No differences can be highlighted; in fact, for all the three compounds, the main phase consists of the hexagonal phase (S.G.: R-3m) of $LiMO_2$. Additional peaks are also visible between 2$\Theta$ of 20°-30°, corresponding to the monoclinic phase with space group C2/m, due to $LiMn_6$ cation ordering in the transition metal layers of $Li_2MnO_3$.

Morphology

The morphology and homogeneity of all materials have been evaluated by HRSEM. Figure 2 reports the micrographs obtained for $Li_{1.2+x}Mn_{0.54}Ni_{0.13}Co_{0.13-x-y}Al_yO_2$ where x=0.03 and y=0.03. From images, it is possible to observe that the sample consists of agglomerates of sub-micron particles with spherical shape.

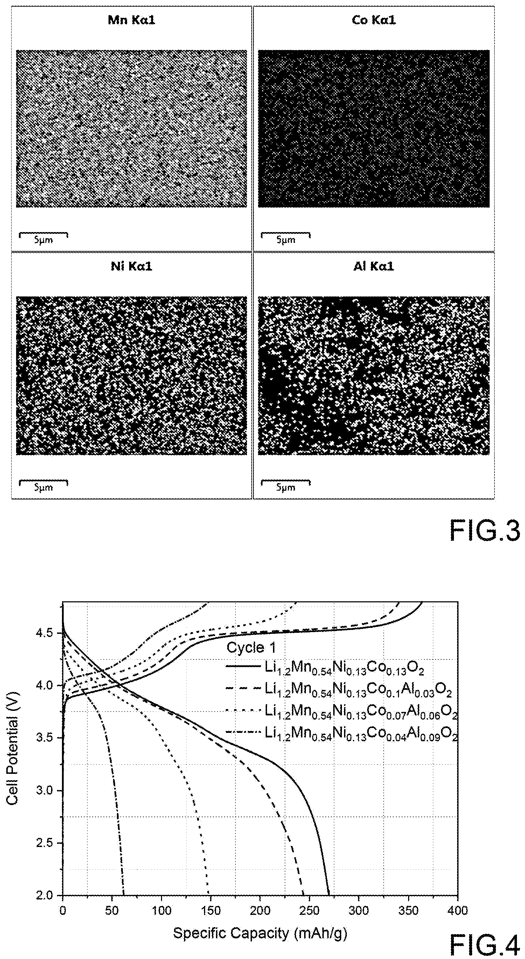

From EDX maps in figure 3, all elements resulted uniformly distributed and there is no presence of segregation of other phase.

From a structural point of view, the materials of the present invention can be described as modified Li-rich layered metal oxides, wherein the content of Cobalt has been highly reduced by co-doping with lithium and aluminum.

Similar to their lead compound ($Li_{1.2}Ni_{0.13}Co_{0.13}Mn_{0.54}O_2$), $Li_{1.2+x}Mn_{0.54}Ni_{0.13}Co_{0.13-x-y}Al_yO_2$ maintain the layered structure composed by rhombohedral $Li(TM)O_2$ phase (TM=transition metal) belonging to space group R-3m and the monoclinic $Li_2MnO_3$ phase belonging to space group C2/m. This layered structure allows intercalation and de-intercalation of Lithium ions during the charge and discharge process. In particular, it was found that the simultaneous replacement of $Co^{2+/3+}$ mixed centers in the layered structure with balanced amounts of $Al^{3+}$ and $Li^+$ positively affects the electronic disorder and stabilizes the performance compared to Co-rich phases.

Electrochemical tests

- Battery assembly

$Li_{1.2+x}Mn_{0.54}Ni_{0.13}Co_{0.13-x-y}Al_yO_2$, with respectively x=0-0.08, y=0.03-0.05, were used for lab tests as electrode in lithium cell. The electrode formulation consists of the active material, a conductive additive (i.e. carbon black) and polyvinylidine fluoride (PVDF) as binder in a weight ratio of 80:10:10. The powders were initially mixed and then 1-methyl-2-pyrrolidinone (NMP) was added dropwise to form a slurry. The obtained slurry was casted onto an Aluminum current collector by the use of a doctor blade and dried at 110°C overnight. The electrode was assembled in a coin cell 2032 facing with a metallic lithium foil. A Whatman GF/D embedded with LP30 electrolyte was used as separator of the two electrodes. The compounds were tested with different electrode formulations (i.e. carbon black, carbon nanotubes and graphene) as well as at different current density.

- Effect of aluminum (figures 4-5)

Here, the comparison between $Li_{1.2+x}Mn_{0.54}Ni_{0.13}Co_{0.13-x-y}Al_yO_2$ as function of content of Aluminum (i.e. x=0 and y=0,0.03,0.06,0.09) was reported. The cells were tested through galvanostatic discharge/recharge cycles using a current density of 37.7 mA/g (C/10) in a potential range of 2-4.8V. The specific capacity decreased when the content of aluminum increased.

However, when y=0.03 the best electrochemical performances were obtained with the small quantity of Aluminum, i.e. y=0.03. The specific discharge capacity in the first cycle was over 240 mAh/g with a capacity retention of 67% after 200 cycles.

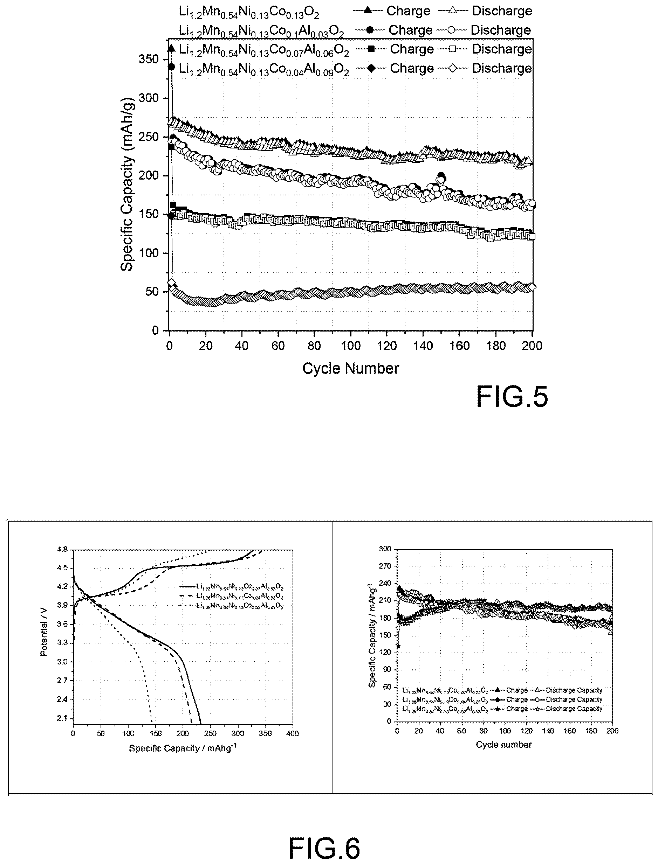

- Li effect (figure 6)

The effect of content of lithium have been evaluated changing x= 0, 0.03, 0.06, 0.08 in $Li_{1.2+x}Mn_{0.54}Ni_{0.13}Co_{0.10-x}Al_{0.03}O_2$.

Figure 6 reports the electrochemical behaviour obtained in lithium cell under galvanostatic condition in the voltage range of 2-4.8V and current density of 37.7mA/g.

Despite overlithiated samples present lower capacity values, they were able to achieve more than 200 mAh/g for prolonged cycling.

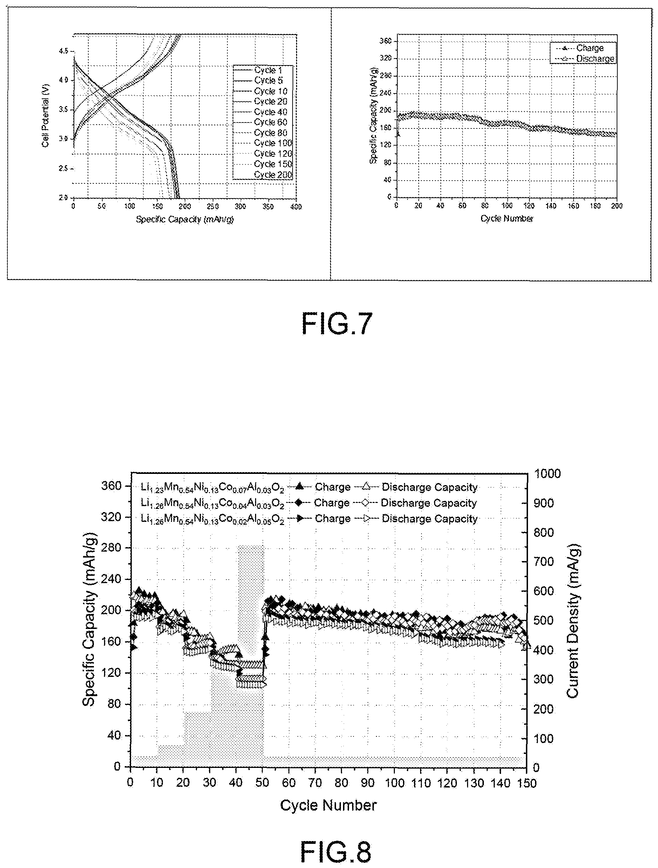

- $Li_{1.26}Mn_{0.54}Ni_{0.13}Co_{0.02}Al_{0.05}O_2$ (figure 7)

Here the electrochemical performances of $Li_{1.2+x}Mn_{0.54}Ni_{0.13}Co_{0.13-x-y}Al_yO_2$, where x=0.06 and y=0.05 are reported. The cells were tested through galvanostatic discharge/recharge cycling using a current density of 37.7 mA/g (C/10) in a potential range of 2-4.8V and the results are shown in figure 7. Similar to the other overlithiated samples, $Li_{1.26}Mn_{0.54}Ni_{0.13}Co_{0.02}Al_{0.05}O_2$ specific capacity remained around 200 mAh/g and it remained stable upon cycling.

- Rate capability (figure 8)

The effect of overlithiation was evaluated in lithium cells also in terms of rate capability. The tests were performed changing the current density from 37.7 mA/g (C/10) up to 754 mA/g (2C). The rate capability tests of $Li_{1.2+x}Mn_{0.54}Ni_{0.13}Co_{0.13-x-y}Al_yO_2$ with x=0.03 and 0.06 and y=0.03-0.05 are here reported. As evident in the figure, all the samples were able to sustain high current, achieving capacity around 120 mAh/g at 2C. Furthermore, when the current decreased again to the initial value, capacity rise to the initial values of more than 200 mAh/g.

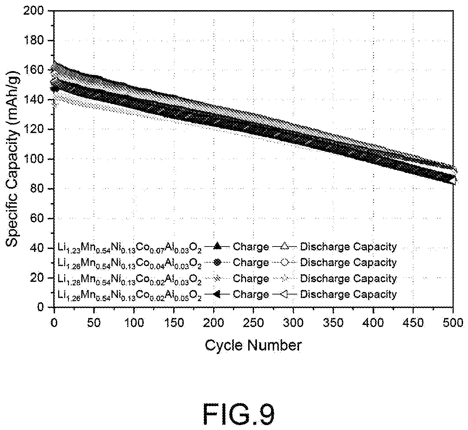

- Cycling test (figure 9)

Prolonged cycling tests of overlithiated $Li_{1.23}Mn_{0.54}Ni_{0.13}Co_{0.07}Al_{0.03}O_2$, $Li_{1.26}Mn_{0.54}Ni_{0.13}Co_{0.04}Al_{0.03}O_2$, $Li_{1.28}Mn_{0.54}Ni_{0.13}Co_{0.02}Al_{0.03}O_2$ and $Li_{1.26}Mn_{0.54}Ni_{0.13}Co_{0.02}Al_{0.05}O_2$ are here reported. The cells were tested through galvanostatic discharge/recharge cycling using a current density of 377 mA/g (1C) in a potential range of 2-4.8V and the results are reported in figure 9.

The discharge capacity achieved are 162.9, 157, 143.2 and 152.5 mAh/g for the first cycle and are 87, 92.9, 89.8 and 85.4 after 500 cycles, respectively for $Li_{1.23}Mn_{0.54}Ni_{0.13}Co_{0.07}Al_{0.03}O_2$, $Li_{1.26}Mn_{0.54}Ni_{0.13}Co_{0.04}Al_{0.03}O_2$, $Li_{1.28}Mn_{0.54}Ni_{0.13}Co_{0.02}Al_{0.03}O_2$ and $Li_{1.26}Mn_{0.54}Ni_{0.13}Co_{0.02}Al_{0.05}O_2$ corresponding to a capacity retention 53%, 59%, 63% and 56%, respectively.

The inventors of the present inventions have surprisingly found that increasing the amount of lithium and aluminum simultaneously, it is possible to drastically decrease the amount of cobalt and maintain, in the same time, high performance in terms of specific capacity, cycling stability and rate capability. This effect can be immediately evident from a comparison between data of figure 4 and data of figures 6 and 7. In fact, figure 4 shows that when only the amount of aluminum is increased (no Li), the performance in terms of specific capacity progressively get worse by decreasing the amount of cobalt. Differently, figures 6 and 7 show that it is possible to decrease the amount of Cobalt guaranteeing, in the same time, high performances in terms of specific capacity, cycling stability and rate capability if the amounts of Lithium and Aluminum have been increased.

As can be clearly evident to a skilled man of the art, the materials of the invention result very promising as cathode for lithium-ion batteries. Indeed, the above materials of the invention, even if comprise low amount of Cobalt, are able to exchange approximately 200 mAh/g in lithium cell for 200 cycles using a current density of ≈40 mA/g (C/10) in a potential range of 2-4.8V. The discharge capacity is about 120 mAh/g at 1C (≈400 mA/g) with a capacity retention of 70 % after 500 cycles.

To sum up, the material of the invention shows a reduced amount of cobalt respect to other existing Li-rich materials and, in the same time, guarantees high performances in terms of specific capacity, cycling stability and rate capability.

## Claims

1. Li-rich transition metal oxides material having general formula $Li_{1.2+x}Mn_{0.54}Ni_{0.13}Co_{0.13-x-y}Al_yO_2$; where:

$$0.01 \leq x \leq 0.1; \quad 0.01 \leq y \leq 0.1; \quad \text{and} \quad 0.03 \leq x+y < 0.13.$$

2. Li-rich transition metal oxides material according to claim 1, wherein $0.03 \leq x \leq 0.08$.

3. Li-rich transition metal oxides material according to claim 1 or 2, wherein $0.03 \leq y \leq 0.05$.

4. Li-rich transition metal oxides material according to one of the preceding claims, characterized to be selected in the group consisting of $Li_{1.23}Mn_{0.54}Ni_{0.13}Co_{0.07}Al_{0.03}O_2$, $Li_{1.26}Mn_{0.54}Ni_{0.13}Co_{0.04}Al_{0.03}O_2$, $Li_{1.28}Mn_{0.54}Ni_{0.13}Co_{0.02}Al_{0.03}O_2$ and $Li_{1.26}Mn_{0.54}Ni_{0.13}Co_{0.02}Al_{0.05}O_2$.

5. A cathode for Li-ion batteries, **characterized by** being made of a Li-rich transition metal oxides material according to anyone of the preceding claims.

6. Sol-gel process for preparing a Li-rich transition metal oxides material according to anyone of the preceding claims 1 to 4; said sol-gel process being **characterized by** comprising the following steps:

   a) mixing the metal precursors with a Li excess in a solvent;
   b) adding a gelling agent to obtain a gel as product keeping a pH > 7;
   c) drying the solution at a temperature lower than 100°C until a viscous mass is obtained;
   d) thermally treating the obtained product at a temperature comprised between 300 and 500 °C for at least an hour;
   e) annealing the milled product of step (d) at a temperature comprised between 800-1000°C.

7. A Process according to claim 6, **characterized in that** the solvent used in step (a) is water.

8. A Process according to claim 6 or 7, **characterized in that** in step (a) the metal precursors are comprised in the group consisting of acetates, nitrates, sulfates, carbonates and oxides.

9. A Process according to anyone of the claims 6 to 8, **characterized in that** in step (b) the additives to promote the gel formation are oxalic or ascorbic or citric acid.

## Patentansprüche

1. Li-reiches Übergangsmetalloxydmaterial mit der allgemeinen Formel $Li_{1.2+x}Mn_{0.54}Ni_{0.13}Co_{0.13-x-y}Al_yO_2$; wobei gilt:

$$0,01 \leq x \leq 0,1; \quad 0,01 \leq y \leq 0,1; \quad \text{und} \quad 0,03 \leq x + y < 0,13.$$

2. Li-reiches Übergangsmetalloxydmaterial nach Anspruch 1, wobei gilt $0,03 \leq x \leq 0,08$.

3. Li-reiches Übergangsmetalloxydmaterial nach Anspruch 1 oder 2, wobei gilt $0,03 \leq y \leq 0,05$.

4. Li-reiches Übergangsmetalloxydmaterial nach einem der vorhergehenden Ansprüche, **dadurch gekennzeichnet, dass** es in der Gruppe ausgewählt ist, welche aus Folgenden besteht:

   $Li_{1,23}Mn_{0,54}Ni_{0,13}Co_{0,07}Al_{0,03}O_2$, $Li_{1,26}Mn_{0,54}Ni_{0,13}Co_{0,04}Al_{0,03}O_2$,

$Li_{1,28}Mn_{0,54}Ni_{0,13}Co_{0,02}Al_{0,03}O_2$ und $Li_{1,26}Mn_{0,54}Ni_{0,13}Co_{0,07}Al_{0,03}O_2$.

5. Kathode für Li-Ionen-Batterien, **dadurch gekennzeichnet, dass** sie aus einem Li-reichen Übergangsmetalloxydmaterial gemäß einem der vorhergehenden Ansprüche hergestellt ist.

6. Sol-Gel-Verfahren zur Zubereitung eines Li-reichen Übergangsmetalloxydmaterials nach einem der vorhergehenden Ansprüche 1 bis 4, wobei das Sol-Gel-Verfahren **dadurch gekennzeichnet ist, dass** es die folgenden Schritte aufweist:

a) Mischen der Metallpräkursoren mit Li im Übermaß in einem Lösungsmittel;
b) Hinzufügen eines Gelierungsmittels, um ein Gel als Produkt zu erhalten, wobei ein PH-Wert > 7 gehalten wird;
c) Trocknen der Lösung bei einer Temperatur von weniger als 100°C, bis eine viskose Masse erhalten wird;
d) Thermische Behandlung des erhaltenen Produktes bei einer Temperatur, die zwischen 300 und 500°C liegt, für mindestens eine Stunde;
e) Wärmebehandlung des bearbeiteten Produktes des Schrittes (d) bei einer Temperatur, die zwischen 800 - 1000°C liegt.

7. Verfahren nach Anspruch 6, **dadurch gekennzeichnet, dass** das in Schritt (a) verwendete Lösungsmittel Wasser ist.

8. Verfahren nach Anspruch 6 oder 7, **dadurch gekennzeichnet, dass** die Metallpräkursoren in Schritt (a) in der Gruppe enthalten sind, die aus Acetaten, Nitraten, Sulfaten, Carbonaten und Oxyden besteht.

9. Verfahren nach einem der Ansprüche 6 bis 8, **dadurch gekennzeichnet, dass** die Additive in Schritt (b) zur Begünstigung der Gel-Bildung Oxalsäure oder Ascorbinsäure oder Zitronensäure sind.


**Revendications**

1. Matériau en oxydes de métaux de transition riches en Li de formule générale $Li_{1,2+x}Mn_{0,54}Ni_{0,13}Co_{0,13-x-y}Al_yO_2$; où :

$$0,01 \leq x \leq 0,1 \; ; \; 0,01 \leq y \leq 0,1 \; ; \; et \; 0,03 \leq x+y < 0,13.$$

2. Matériau en oxydes de métaux de transition riches en Li selon la revendication 1, dans lequel $0,03 \leq x \leq 0,08$.

3. Matériau en oxydes de métaux de transition riches en Li selon la revendication 1 ou 2, dans lequel $0,03 \leq y \leq 0,05$.

4. Matériau en oxydes de métaux de transition riches en Li selon l'une quelconque des revendications précédentes, **caractérisé en ce qu'**il est choisi dans le groupe constitué par $Li_{1,23}Mn_{0,54}Ni_{0,13}Co_{0,07}Al_{0,03}O_2$, $Li_{1,26}Mn_{0,54}Ni_{0,13}Co_{0,04}Al_{0,03}O_2$, $Li_{1,28}Mn_{0,54}Ni_{0,13}Co_{0,02}Al_{0,03}O_2$ et $Li_{1,26}Mn_{0,54}Ni_{0,13}Co_{0,02}Al_{0,05}O_2$.

5. Cathode pour batteries au Li-ion, **caractérisée en ce qu'**elle est faite d'un matériau en oxydes de métaux de transition riches en Li selon l'une quelconque des revendications précédentes.

6. Procédé sol-gel pour préparer un matériau en oxydes de métaux de transition riches en Li selon l'une quelconque des revendications 1 à 4 ; ledit procédé sol-gel étant **caractérisé en ce qu'**il comprend les étapes suivantes :

a) mélange des précurseurs métalliques avec un excès de Li dans un solvant ;
b) addition d'un agent gélifiant pour que soit obtenu un gel sous la forme d'un produit conservant un pH > 7 ;
c) séchage de la solution à une température inférieure à 100°C jusqu'à obtention d'une masse visqueuse ;
d) traitement thermique du produit obtenu à une température comprise entre 300 et 500°C pendant au moins une heure ;
e) recuit du produit broyé de l'étape (d) à une température comprise entre 800 et 1000°C.

7. Procédé selon la revendication 6, **caractérisé en ce que** le solvant utilisé dans l'étape (a) est l'eau.

8. Procédé selon la revendication 6 ou 7, **caractérisé en ce que**, dans l'étape (a), les précurseurs métalliques sont compris dans le groupe constitué par les acétates, les nitrates, les sulfates, les carbonates et les oxydes.

**9.** Procédé selon l'une quelconque des revendications 6 à 8, **caractérisé en ce que**, dans l'étape (b), les additifs pour favoriser la formation de gel sont l'acide oxalique ou ascorbique ou citrique.

FIG.1

FIG.2

FIG.3

FIG.4

EP 4 178 916 B1

FIG.5

FIG.6

11

FIG.7

FIG.8

FIG.9

**EP 4 178 916 B1**

**REFERENCES CITED IN THE DESCRIPTION**

**Patent documents cited in the description**

- IT 102020000016966
- US 2019334171 A